# EUROPÄISCHE PATENTANMELDUNG

(11) **EP 2 255 948 A2**
(43) Veröffentlichungstag der Anmeldung: **01.12.2010**
(21) Anmeldenummer: 10005517.7
(22) Anmeldetag: 27.05.2010
(51) Int. Cl.: B29C 49/00, B29C 51/12, B29C 69/00, B29C 49/20

(54) **Verfahren und Vorrichtung zur Herstellung eines hohlen Kunststoffformteils mit mindestens einem Einsatzteil**

(30) Priorität: 29.05.2009 DE 102009023173
(71) Anmelder: Linbrunner Alois Handel- und Kunststoffbearbeitung (Einzelunternehmen), 84152 Mengkofen/Hofdorf (DE)
(72) Erfinder: Linbrunner, Alois, 84152 Mengkofen/Hofdorf (DE)
(74) Vertreter: advotec.

(57) **Zusammenfassung**

Es werden ein Verfahren und eine Formvorrichtung zur Herstellung eines Kunststoff formteils mit mindestens einem Einsatzteil (34) aus zwei Thermoplastzuschnitten (14,18) nach einem Vakuumverform- bzw. Thermoformprozess vorgeschlagen. Das Verfahren umfasst folgende Schritte:
- Beschicken einer unteren Verformeinheit (12) der Formvorrichtung (10) mit einem unteren Thermoplastzuschnitt (14);
- Beschicken einer oberhalb der unteren Verforineinheit (12) angeordneten, oberen Verformeinlieit (16) der Formvorrichtung (10) mit einem oberen Thermoplastzuschnift (18);
- Fixieren des Einsatzteils (34) an einem Halterahmen (32) der Form vorrichtung (10), der zwischen der oberen Verformeinheit (16) und der unteren Verformeinheit (12) angeordnet ist;
- Formen des unteren Thermoplastzuschnitts (14) zu einem unteren Formteilelement;
- Formen des oberen Tliermoplastzusclinitts (18) zu einem oberen Formteilelement;
- Ablegen des Einsatzteils (34) auf dem unteren Formteilelement mittels des Halterahmens (32); und

Zusammenfügen des oberen Formteilelements und des unteren Formteiletements, so dass das Einsatzteil (34) zwischen diesen aufgenommen ist.

## Beschreibung

Die Erfindung betrifft ein Verfahren zur Herstellung eines hohlen Kunststoffformteils mit mindestens einem Einsatzteil aus zwei Thermoplastzuschnitten sowie eine Vorrichtung zur Durchführung dieses Verfahrens.

Aus der EP 1 619 006 A2 ist eine Vorrichtung zur Herstellung eines Hohlkörpers aus zwei Thermoplastzuschnitten bekannt, der einen Einsatzteil enthält, welches in dem von dem Hohlkörper gebildeten Hohlraum angeordnet ist. Mittels der Vorrichtung kann nach einem Vakuumverformprozess bzw. Thermoformprozess, der als so genanntes Twinsheet-Verfahren bekannt ist, der Hohlkörper aus zwei Thermoplastzuschnitten geformt werden. Hierbei werden die beiden Thermoplastzuschnitte erwärmt, vakuumverformt und anschließend zur Ausbildung des Hohlkörpers miteinander verschweißt. Die Vorrichtung umfasst eine erste Verformeinheit, mittels der aus einem ersten Thermoplastzuschnitt ein erstes bzw. oberes Formteilelement des Hohlkörpers herstellbar ist, sowie eine zweite Verformeinheit, die in der Vorrichtung neben der ersten Verformeinheit angeordnet ist und mittels der aus einem zweiten Thermoplastzuschnitt mit einem zweiten Formwerkzeug das zweite bzw. untere Formteilelement des Hohlkörpers herstellbar ist. Nach der Herstellung der beiden Formteilelemente kann in das untere Formteilelement ein Einsatzteil eingelegt werden. Anschließend wird das zur Herstellung des unteren Formteilelements eingesetzte Formwerkzeug mit dem unteren Formteilelement lateral unter das mit dem oberen Formteilelement bestückte Formwerkzeug verfahren. Dann werden die beiden Formwerkzeuge zum Zusammenfügen der beiden Formteilelemente gegeneinander verfahren, so dass der Hohlkörper mit dem darin angeordneten Einsatzteil hergestellt wird. Dieser kann dann entformt werden. Das Einsetzen des Einsatzteils in das untere Formteilelement und dessen anschließendes Verfahren unter das Werkzeug für das obere Formteilelement sind zeitaufwändig, was sich wiederum in den Kosten zur Herstellung des Hohlkörpers niederschlägt.

Der Erfindung liegt die Aufgabe zugrunde, eine Vorrichtung und ein Verfahren zur Herstellung eines doppelwandigen Kunststoffformteils mit mindestens einem Einsatzteil zu schaffen, welches die Herstellung der Kunststoffformteile mit kurzen Taktzeiten zulässt.

Erfindungsgemäß wird daher ein Verfahren zur Herstellung eines doppelwandigen Kunststoffformteils mit mindestens einem Einsatzteil aus zwei Thermoplastzuschnitten nach einem Vakuumverform- bzw. Thermoformprozess vorgeschlagen. Bei diesem mittels einer Formvorrichtung durchführbaren Verfahren werden eine untere Verformeinheit der Formvorrichtung und eine oberhalb der unteren Verformeinheit angeordnete, obere Verformeinheit der Formvorrichtung jeweils mit einem flächigen Thermoplastzuschnitt beschickt. An einem Halterahmen der Formvorrichtung, der zwischen der oberen Verformeinheit und der unteren Verformeinheit angeordnet ist, wird das mindestens eine Einsatzteil fixiert. Mittels der unteren Verformeinheit wird der untere Thermoplastzuschnitt zu einem unteren Formteilelement geformt. Mittels der oberen Verformeinheit wird der obere Thennoplastzuschnitt zu einem oberen Formteilelement geformt. Nach dem Formen des unteren Formteilelements wird das Einsatzteil auf diesem mittels des Halterahmens abgelegt. Anschließend werden das obere Formteilelement und das untere Formteilelement zusammengefügt, so dass das Einsatzteil zwischen diesen beiden Formteilelementen aufgenommen ist.

Erfindungsgemäß wird also ein Verfahren bereitgestellt, nach dem Doppelformteile, das heißt so genannte Twin-Sheet-Formteile mit einem oder mehreren innen liegenden Bauteilen hergestellt werden können. Durch den Einsatz des Halterahmens, der zwischen der oberen Verformeinheit und der unteren Verformeinheit angeordnet ist, ist es möglich, das mindestens eine Einsatzteil im Automatikbetrieb einzulegen und in dem von den beiden Formteilelementen begrenzten Hohlraum anzuordnen.

Das doppelwandige Kunststoffformteil, das nach dem Verfahren nach der Erfindung hergestellt wird, kann ein beliebiger Hohlkörper mit einem innen liegenden zusätzlichen Bauteil sein. Beispielsweise handelt es sich bei dem Kunststoffformteil um einen Kraftfahrzeugtank, der als Einsatzteil eine Baugruppe aufnimmt, die ein Schwimmersystem zur Ermittlung des Füllstandes darstellt. Denkbar ist es auch, dass das Einsatzteil ein geschäumtes Formelement ist, das bei dem Verfahren nach der Erfindung zwischen zwei Thermoplastschalen angeordnet wird. Das Einsatzteil kann auch ein Luftpolster oder loses Teil sein.

Um das Zusammenfügen des oberen Formteilelements und des unteren Formteilelements nicht zu stören, wird bei einer bevorzugten Ausführungsform des Verfahrens nach der Erfindung eine Fixiereinrichtung des Halterahmens nach dem Ablegen des Einsatzteils aus einem Zwischenraum zwischen dem oberen Formteilelement und dem unteren Formteilelement gefahren. Der Halterahmen umfasst also eine Einlegemechanik, die so konstruiert ist, dass sie nach dem Ablegen des Einsatzteils aus dem Verfahrweg der Formteilelemente entfernt wird, um den Doppelformprozess nicht zu verhindern. Vorzugsweise wird hierbei die Einlegemechanik bzw. die Fixiereinrichtung vollständig von einem rahmenartigen Gehäuse des Halterahmens aufgenommen. Um eine in dem von dem Halterahmen begrenzten Raum der Formvorrichtung aufgestaute Wärme weiter für den Prozess nutzen zu können, wird während der Betätigung des Halterahmens zum Einlegen des Einsatzteils der Halterahmen geschlossen gehalten.

Beim Einlegen des Einsatzteils kann dieses mit dem unteren Formteilelement verklemmt, verklebt oder verschweißt werden. Das Einlegeteil kann aber auch lose in dem Hohlraum liegen.

Zur Optimierung des Formprozesses kann zumindest einer der Thermoplastzuschnitte vor seinem Verformen in der betreffenden Verformeinheit beidseits beheizt werden. Beispielsweise erfolgt die beidseitige Beheizung einerseits mittels einer der jeweiligen Verformeinheit zugeordneten Heizung und andererseits mittels einer an dem Halterahmen für das Einsatzteil angeordneten Zwischenheizung. In diesem Falle ist der Halterahmen so ausgebildet, dass er parallel zu seiner Ebene verfahrbar ist, so dass die Zwischenheizung aus dem Raum zwischen den beiden Thermoplastzuschnitten ausgefahren und das an dem Halterahmen fixierte Einsatzteil in diesen Raum eingefahren werden kann, so dass das Einsatzteil nach der Ausbildung des unteren Formteilelements auf diesem mittels der Einlegemechanik des Halterahmens abgelegt werden kann.

Die Erfindung hat auch eine Formvorrichtung zur Herstellung eines hohlen Kunststoffformteils mit mindestens einem Einsatzteil aus zwei Thermoplastzuschnitten nach einem Vakuumverform- bzw. Thermoförmprozess zum Gegenstand. Diese Formvorrichtung umfasst eine untere Verformeinheit zur Herstellung eines unteren Formteilelements aus einem unteren Thermoplastzuschnitt, der ein unteres Formwerkzeug, eine untere Heizeinrichtung und eine untere Halteeinrichtung für den unteren Thermoplastzuschnitt umfasst, eine obere Verformeinheit zur Herstellung eines oberen Formteilelements aus einem oberen Thermoplastzuschnitt, welche oberhalb der unteren Verformeinheit angeordnet ist und ein oberes Formwerkzeug, eine obere Heizeinrichtung und eine obere Halteeinrichtung für den oberen Thermoplastzuschnitt umfasst, eine Verfahreinrichtung, um das obere Formteilelement und das untere Formteilelement zusammen zu fügen und einen Halterahmen für das mindestens eine Einsatzteil, der zwischen der oberen Verformeinheit und der unteren Verformeinheit angeordnet ist.

Mittels dieser Formvorrichtung können Twin-Sheet-Formteile so hergestellt werden, dass in integrierter Weise ohne beträchtlichen Wärmeverlust ein Hohlkörper hergestellt werden kann. Es können zwei aus jeweils einem Thermoplastzuschnitt gefertigte Formteilelemente unter Nutzung der in der Vorrichtung vorhandenen Wärme verschweißt werden. Auf Klebstoffe zur Verbindung der Formteilelemente kann verzichtet werden. Damit bleiben die eingesetzten Thermoplasten rein, so dass sie auch recycelt werden können.

Des Weiteren ist die Formvorrichtung nach der Erfindung vorzugsweise derart ausgelegt, dass die untere Halteeinrichtung, die obere Halteeinrichtung und der Halterahmen für das mindestens eine Einsatzteil unabhängig voneinander fahrbar sind. Zweckmäßigerweise können auch die Haltesysteme für die Thermoplastzuschnitte bzw. die hieraus geformten Formteilelemente beim Verbinden bzw. Verpressen der beiden Formteilelemente den Formwerkzeugen folgen, und sogar gegebenenfalls durch den von dem Halterahmen für das Einsatzteil begrenzten Raum hindurchfahren, so dass eine Verstreckung des Werkstoffs der Formteilelemente möglichst gering gehalten wird.

Das Fixieren des Einsatzteils an dem Halterahmen kann manuell, mittels einer Beschickungsanlage oder auch mittels eines geeigneten Roboters erfolgen. Entsprechend kann auch die Beschickung der beiden Verformeinheiten mit den Thermoplastzuschnitten manuell oder automatisiert mittels eines Roboters oder dergleichen erfolgen. Denkbar ist es insbesondere auch, die Thermoplastzuschnitte von einer an der Formvorrichtung bereitgestellten Rolle in die Vorrichtung einzuführen.

Bei einer speziellen Ausführungsform der Vorrichtung nach der Erfindung weist der Halterahmen eine Fixiereinrichtung für das Einsatzteil auf, die nach einem Anordnen des Einsatzteils auf einen der Thermoplastzuschnitte lösbar ist und eine Antriebseinrichtung aufweist, um aus dem Zwischenraum.zwischen dem oberen Formteilelement und dem unteren Formteilelement entfernt zu werden.

Die Fixiereinrichtung ist insbesondere Bestandteil einer Einlegemechanik und kann einen Magneten und/oder auch ein schwenkbar gelagertes Klemmelement umfassen. Grundsätzlich bestehen beliebige Fixiermöglichkeiten für das mindestens eine Einlegeteil, die jedoch gewährleisten sollten, dass sämtliche Halteelemente vor dem Zusammenfügen der beiden Formteilelemente aus deren Bewegungsweg gefahren werden.

Zur optimalen Positionierung des Einsatzteils in dem herzustellenden Kunststoffformteil ist der Halterahmen vorzugsweise höhenverstellbar. Des Weiteren kann der Halterahmen parallel zu seiner Ebene verfahrbar sein.

Zur Optimierung des Formprozesses ist es zweckmäßig, wenn zwischen den beiden Thermoplastzuschnitten ein weiterer Heizer angeordnet ist, so dass zumindest einer der Thermoplastzuschnitte von oben und von unten beheizt werden kann. Dieser Zwischenheizer ist vorzugsweise in den Halterahmen für das Einsatzteil integriert, so dass diese einen Halteabschnitt für das mindestens eine Einsatzteil und einen Heizabschnitt mit dem Zwischenheizer umfasst. Zum Ablegen des Einsatzteils wird der Heizabschnitt vorzugsweise aus dem Zwischenraum zwischen den dann gefertigten Formteilelementen ausgefahren und der Halteabschnitt in diesen eingefahren. Der Halterahmen hat damit eine Doppelfunktion, wobei das Verfahren der Abschnitte mit einer hohen Taktfrequenz erfolgen kann, so dass die Taktzeiten zur Fertigung des Kunststoffformteils kurz gehalten werden.können.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Formwerkzeugs nach der Erfindung sind in der Zeichnung schematisch vereinfacht dargestellt und werden in der nachfolgenden Beschreibung näher erläutert. Es zeigt:
- Fig. 1: einen schematischen Aufbau einer Formvorrichtung nach der Erfindung;
- Fig. 2: eine zweite Ausführungsform einer Formvorrichtung nach der Erfindung mit einem höhenverstellbaren Halterahmen;
- Fig. 3: eine weitere Ausführungsform einer Formvorrichtung nach der Erfindung mit einer Zwischenheizung; und
- Fig. 4: die Formvorrichtung nach Fig. 3 beim Verfügen eines unteren und eines oberen Formteilelements.

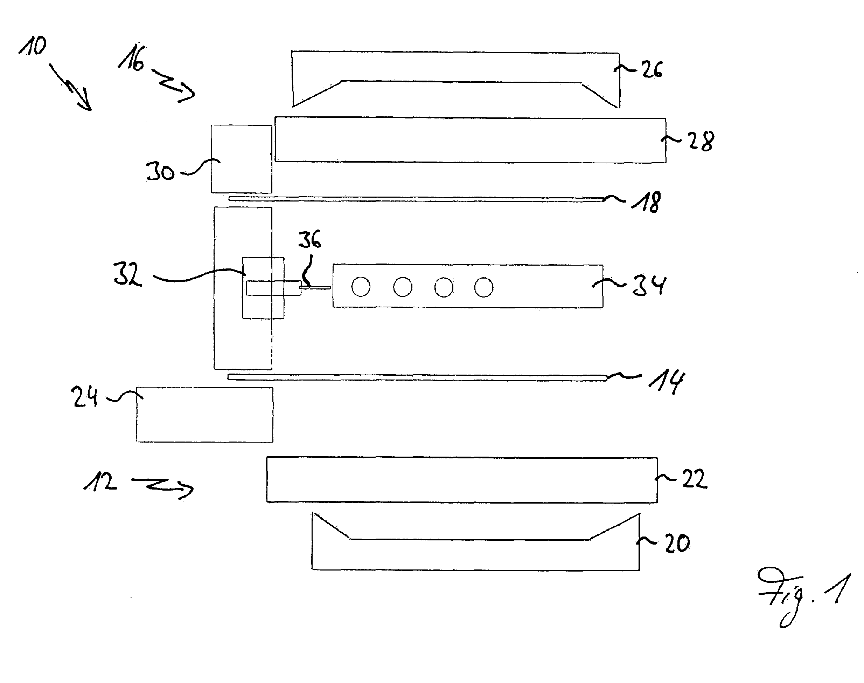

In Fig. 1 ist in stark schematisierter Weise eine Forinvorrichtung 10 dargestellt, die eine Thermo- bzw. Vakuumformmaschine darstellt und mittels der nach einem so genannten Twin-Sheet-Verfahren ein zweischaliges Kunststoffformteil hergestellt werden kann, das ein Einsatzteil aufnimmt, das gegebenenfalls eine Funktionsgruppe bzw. Baugruppe darstellt und auch den von dem Kunststoffformteil begrenzte Hohlraum vollständig ausfüllen kann.

Die Formvorrichtung 10 umfasst eine untere Verformeinheit 12 zur Herstellung eines unteren Formteilelements aus einem unteren Thermoplastzuschnitt 14 und eine obere Verformeinheit 16 zur Herstellung eines oberen Formteilelements aus einem oberen Thermoplastzuschnitt 18. Die untere Verformeinheit 12 umfasst hierzu ein unteres Fonnwerkzeug 20, eine untere Heizeinrichtung 22 zur Erweichung des unteren Thermoplastzuschnittes 14 sowie eine untere Halteeinrichtung 24 zur Fixierung bzw. Halterung des unteren Thermoplastzuschnitts 14 in der Formvorrichtung. Die obere Verformeinheit 16, die oberhalb der unteren Verformeinheit 12 angeordnet ist, umfasst ein oberes Formwerkzeug 26, eine obere Heizeinrichtung 28 sowie eine als Spannrahmen ausgebildete obere Halteeinrichtung 30 für den oberen Thermoplastzuschnitt 18.

Des Weiteren umfasst die Formvorrichtung 10 einen Halterahmen 32, mittels dessen ein Einsatzteil 34 zwischen den beiden Thermoplastzuschnitten 14 und 18 gehaltert und auf einem unteren, aus dem unteren Thermoplastzuschnitt 14 gebildeten Formteilelement abgelegt werden kann. Der Halterahmen 32 umfasst hierzu eine Einlegemechanik 36, die auch als Fixiereinrichtung für das Einsatzteil 34 dient.

Die in Fig. 1 dargestellte Formvorrichtung arbeitet in nachfolgend beschriebener Weise.

Nach dem Einspannen des unteren Thermoplastzuschnitts 14 und des oberen Thermoplastzuschnitts 18 werden diese beiden mittels der von den Heizeinrichtungen 14 und 28 gebildeten Heizfelder aufgeheizt und erweicht. Anschließend werden die Formwerkzeuge 20 und 26 gegen den jeweiligen erweichten Thermoplastzuschnitt 14 bzw. 28 gefahren, so dass unter Ausbildung eines Vakuums, das heißt nach einem Vakuumformverfahren aus dem jeweiligen Thermoplastzuschnitt 14 bzw. 18 ein unteres Formteilelement bzw. ein oberes Formteilelement ausgebildet wird, dessen Form durch die Form des jeweiligen Formwerkzeugs 20 bzw. 26 vorgegeben ist. Bereits vor dem vorstehend beschriebenen Heiz- und Formprozess wurde an dem Halterahmen 32 das Einsatzteil 34 befestigt und damit von der Formvorrichtung 10 aufgenommen. Nach dem Formprozess wird das Einsatzteil 34 mittels der Einlegemechanik 36 auf der Innenseite des aus dem unteren Thermoplastzuschnitt 14 gefertigten Formteilelement abgelegt. Zwischen dem Ausformen der Formteilelemente und dem Ablegen des Einsatzteils ist es also nicht erforderlich, die Formvorrichtung 10 zu öffnen, so dass auch keine Wärme verloren geht, die zum Verschweißen der Formteilelemente genutzt werden kann.

Anschließend wird die Einlegemechanik 36 zurückgezogen, so dass die Formwerkzeuge 20 und 26 gegeneinander verfahren werden können und die noch aufgeweichten Formteilelemente miteinander verfügt bzw. verschweißt werden. Nach dem Abkühlen kann dann das aus dem oberen Formteilelement, dem unteren Formteilelement und dem Einlegeteil 34 bestehende Kunststoffformteil entformt werden.

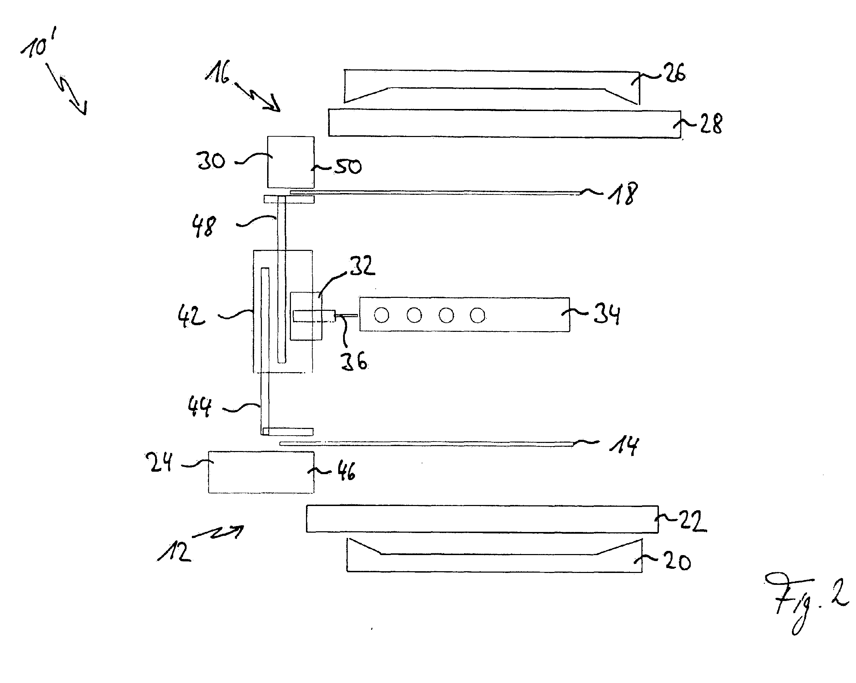

In Fig. 2 ist eine alternative Ausführungsform einer Formvorrichtung 10' zur Herstellung eines Kunststoffformteils mit mindestens einem Einsatzteil 34 dargestellt. Die in Fig. 2 dargestellte Formvorrichtung 10' unterscheidet sich von derjenigen nach Fig. 1 dadurch, dass der Halterahmen 32 gegenüber der unteren Halteeinrichtung 12 und der oberen Halteeinrichtung 16 mittels einer Höhenverstelleinrichtung 42 hinsichtlich seiner vertikalen Lage verstellbar ist. Der Höhenverstelleinrichtung 42 ist auch eine Klemmhebelanordnung 44 zum Fixieren des unteren Thermoplastzuschnitts 14 an einer Fensterplatte 46 der unteren Halteeinrichtung 24 und eine obere Klemmhebeleinrichtung 48 zum Verklemmen des oberen Thermoplastzuschnitts 18 an einem oberen Spannrahmen 50 der oberen Halteeinrichtung 30 zugeordnet. Im übrigen entspricht die Formvorrichtung 10' derjenigen nach Fig. 1.

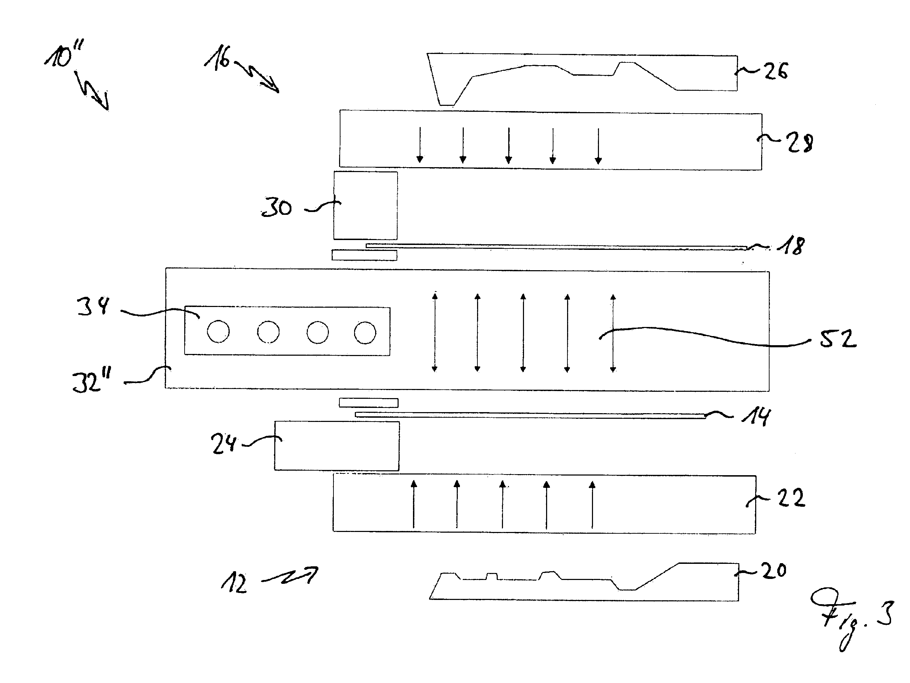

In Fig. 3 ist eine weitere Ausführungsform einer Formvorrichtung nach der Erfindung dargestellt, die wiederum im wesentlichen derjenigen nach Fig. 1 entspricht, sich von dieser aber dadurch unterscheidet, dass ein Halterahmen 32" für ein Einsatzteil 34 eine Zwischenheizung 52 umfasst, die in einem Heizabschnitt des Halterahmens 32" angeordnet ist. Das Einsatzteil 34 ist in einem Halteabschnitt des Halterahmens 32" angeordnet. Der Halterahmen 32" ist parallel zu seiner Ebene verfahrbar, so dass einerseits das Heizfeld 52 zwischen den beiden Thermoplastzuschnitten 14 und 18 angeordnet werden kann und diese beiden jeweils beidseits geheizt werden können und andererseits nach dem mittels der beiden Formwerkzeuge 20 und 26 durchgeführten Fonnprozesses das Einsatzteil 34 mittels einer hier nicht näher dargestellten Einlegemechanik auf das untere Formteilelement abgelegt werden kann und durch Verschweißen des unteren Formteilelements mit dem oberen, mittels des oberen Formwerkzeugs 26 geformten Formteilelements in das Kunststoffformteil integriert werden kann.

Die obere Heizeinrichtung 28 ist an den oberen Spannrahmen 50 montiert, so dass eine Höheneinstellung desselben nicht nötig ist. Es liegt stets ein optimaler Abstand zu dem eine formbare Kunststoffplatte darstellenden Thermoplastzuschnitt 18 vor.

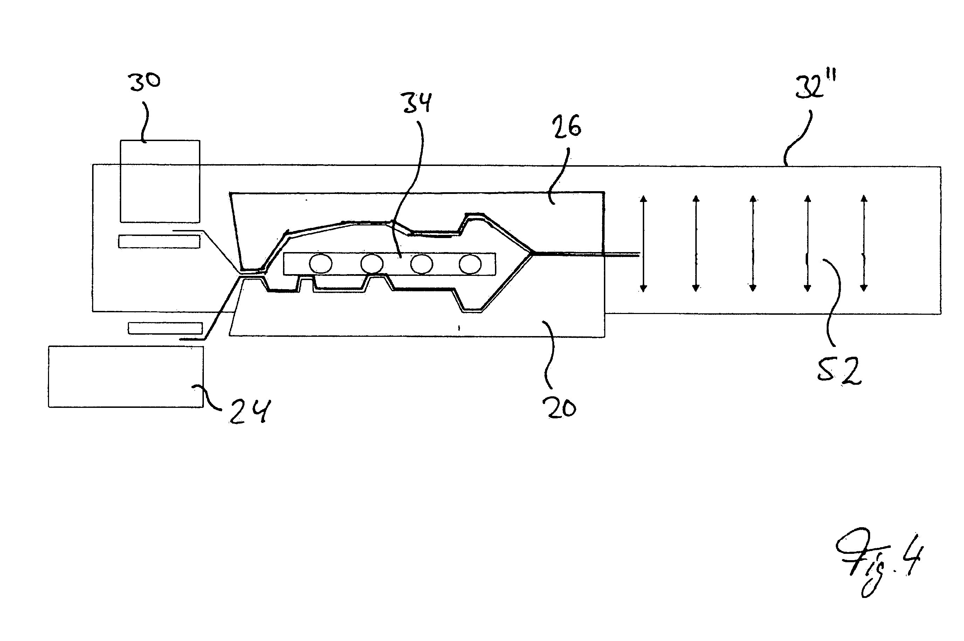

In der in Fig. 4 dargestellten Stellung ist das Einsatzteil 34 auf dem unteren Formteilelement abgelegt, wobei die Einlegemechanik 36 bereits in den Halterahmen 32 zurückgefahren wurde. Durch das Gegeneinanderfahren der beiden Formwerkzeuge 20 und 26 werden die beiden aus den Thermoplastzuschnitten gebildeten Formteilelemente miteinander verpresst. Das die Zwischenheizung darstellende Heizfeld 52 liegt dann außerhalb des Bereichs der Formwerkzeuge 20 und 26.

Wenn des Weiteren die beiden Thermoplastzuschnitte 14 und 18 aus unterschiedlichen Materialien bestehen, beispielsweise eine aus Schaumstoff mit einer Stoffauflage und der andere aus Hartkunstsoff, ist es mit der in Fig. 3 dargestellten Vorrichtung 10" möglich, die verschiedenen Kunststoffe mit unterschiedlichen Temperaturen aufzuheizen, die beispielsweise zwischen 150°C und 300°C liegen. Das Erweichen der Thermoplastzuschnitten 14 und 18 kann beispielsweise mittels Stützluft unterstützt werden.

## Patentansprüche

1. Verfahren zur Herstellung eines hohlen Kunststoffformteils mit mindestens einem Einsatzteil (34) aus zwei Thermoplastzuschnitten (14,18) nach einem Vakuumverform-bzw. Thermoformprozess in einer Formvorrichtung (10), umfassend folgende Schritte:
- Beschicken einer unteren Verformeinheit (12) der Formvorrichtung (10) mit einem unteren Thermoplastzuschnitt (14);
- Beschicken einer oberhalb der unteren Verformeinheit (12) angeordneten, oberen Verformeinheit (16) der Formvorrichtung (10) mit einem oberen Thermoplastzuschnitt (18);
- Fixieren des Einsatzteils (34) an einem Halterahmen (32) der Formvorrichtung (10), der zwischen der oberen Verformeinheit (16) und der unteren Verformeinheit (12) angeordnet ist;
- Formen des unteren Thermoplastzuschnitts (14) zu einem unteren Formteilelement;
- Formen des oberen Thermoplastzuschnitts (18) zu einem oberen Formteilelement;
- Ablegen des Einsatzteils (34) auf dem unteren Formteilelement mittels des Halterahmens (32); und
- Zusammenfügen des oberen Formteilelements und des unteren Formteilelements, so dass das Einsatzteil (34) zwischen diesen aufgenommen ist.

2. Verfahren nach Anspruch 1, **dadurch gekennzeichnet, dass** eine Fixiereinrichtung (36) des Halterahmens (32) nach dem Ablegen des Einsatzteils (34) aus einem Zwischenraum zwischen dem oberen Formteilelement und dem unteren Formteilelement gefahren wird.

3. Verfahren nach Anspruch 1 oder 2, **dadurch gekennzeichnet, dass** das Einsatzteil (34) mit dem unteren Formteilelement verklemmt, verklebt oder verschweißt wird.

4. Verfahren nach einem der Ansprüche 1 bis 3, **dadurch gekennzeichnet, dass** zumindest einer der Thermoplastzuschnitte (14,18) vor seinem Verformen beidseits beheizt wird.

5. Verfahren nach einem der Ansprüche 1 bis 4, **dadurch gekennzeichnet, dass** eine an dem Halterahmen angeordnete Zwischenheizung nach einem Heizprozess aus einer zwischen den Thermoplastzuschnitten (14,18) liegenden Arbeitsstellung ausgefahren und das Einsatzteil (34) in diesen Zwischenraum eingefahren wird.

6. Verfahren nach einem der Ansprüche 1 bis 5, **dadurch gekennzeichnet, dass** das Einsatzteil eine vorgefertigte Baugruppe oder Funktionsgruppe ist.

7. Formvorrichtung zur Herstellung eines hohlen Kunststoffformteils mit mindestens einem Einsatzteil (34) aus zwei Thermoplasizuschnitten (14,18) nach einem Vakuumverform- bzw. Thermoformprozess, umfassend
- eine untere Verformeinheit zur Herstellung eines unteren Formteilelementes aus einem unteren Thermoplastzuschnitt (14), die ein unteres Formwerkzeug (20), eine untere Heizeinrichtung (22) und eine untere Halteeinrichtung (24) für den unteren Thermoplastzuschnitt (14) umfasst,
- eine obere Verformeinheit (16) zur Herstellung eines oberen Formteilelements aus einem oberen Thermoplastzuschnitt (18), die oberhalb der unteren Verformeinheit (12) angeordnet ist und ein oberes Formwerkzeug (26), eine obere Heizeinrichtung (28) und eine obere Halteeinrichtung (30) für den oberen Thermoplastzuschnitt (18) umfasst,
- eine Verfahreinrichtung, um das obere Formteilelement und das untere Formteilelement zusammenzufügen, und
- einen Halterahmen (32) für das mindestens eine Einsatzteil (34), der zwischen der oberen Verformeinheit (16) und der unteren Verformeinheit (12) angeordnet ist.

8. Formvorrichtung nach Anspruch 7, **dadurch gekennzeichnet, dass** der Halterahmen (32) eine Fixiereinrichtung (36) für das Einsatzteil (34) aufweist, die nach einem Anordnen des Einsatzteils (34) auf einem der Thermoplastzuschnitte (14,18) lösbar ist und eine Antriebseinrichtung aufweist, um die Fixiereinrichtung (36) nach dem Formen der beiden Formteilelemente aus dem Zwischenraum zwischen diesen zu entfernen.

9. Formvorrichtung nach Anspruch 8, **dadurch gekennzeichnet, dass** die Fixiereinrichtung einen Magneten und/oder einen Saugnapf umfasst.

10. Vorrichtung nach Anspruch 8 oder 9, **dadurch gekennzeichnet, dass** die Fixiereinrichtung ein schwenkbar gelagertes Klemmelement umfasst.

11. Formvorrichtung nach einem der Ansprüche 7 bis 10, **dadurch gekennzeichnet, dass** der Halterahmen (32) höhenverstellbar ist.

12. Formvorrichtung nach einem der Ansprüche 7 bis 11, **dadurch gekennzeichnet, dass** der Halterahmen (32) parallel zu seiner Ebene verfahrbar ist.

13. Formvorrichtung nach einem der Ansprüche 7 bis 12, **dadurch gekennzeichnet, dass** der Halterahmen (32) einen Halteabschnitt für das mindestes eine Einsatzteil (34) und einen Heizabschnitt umfasst, in dem ein Zwischenheizer (52) für den oberen Thermoplastzuschnitt (18) und/oder den unteren Thermoplastzuschnitt (14) angeordnet ist.
